# EUROPÄISCHE PATENTSCHRIFT

(11) **EP 3 372 397 B1**
(45) Veröffentlichungstag und Bekanntmachung des Hinweises auf die Patenterteilung: **20.10.2021**
(21) Anmeldenummer: 18158718.9
(22) Anmeldetag: 26.02.2018
(51) Int. Cl.: B31B 50/60, B31B 50/74, B31B 110/10, B31B 120/40, B31F 1/36, B29C 65/00, B31B 105/00, B31B 110/20, B65D 3/06, B65D 3/12, B29C 65/08

(54) **VERFAHREN ZUM HERSTELLEN VON BECHERN AUS KARTON**
METHOD FOR THE MANUFACTURE OF CUPS MADE OF CARTON
PROCÉDÉ DE FABRICATION DE GOBELETS EN CARTON

(30) Priorität: 10.03.2017 DE 102017105119
(43) Veröffentlichungstag der Anmeldung: 12.09.2018
(73) Patentinhaber: AR Packaging GmbH, 65830 Kriftel (DE)
(72) Erfinder: MACK, Ralf, 81827 München (DE)
(74) Vertreter: Hauck Patentanwaltspartnerschaft mbB

(56) Entgegenhaltungen:
- DE-A1-102009 055 986
- DE-A1-102010 016 390
- KR-A- 20130 127 410
- US-A1- 2016 168 799

## Beschreibung

Die Erfindung betrifft ein Verfahren zum Herstellen von Bechern aus Karton mit einer flüssigkeitsundurchlässigen Beschichtung an der Innenseite. Derartige Becher werden insbesondere für Einmalgebrauch verwendet, z.B. zum Trinken von Kaffee, Wasser, Softdrinks oder Säften.

Bekannt ist die Herstellung von Kartonbechern aus kreisringsegmentförmigen Zuschnitten aus Karton mit einer Beschichtung aus siegelfähigem Lack oder Polyethylen an der Innenseite. Jeder Kartonzuschnitt wird um einen konischen Dorn herumgelegt, sodass zwei seitliche Randbereiche einander überlappen. Durch Anpressen eines dauerbeheizten Werkzeuges oder eines Ultraschallwerkzeuges von außen gegen die einander überlappenden Randbereiche erfolgt die Seitenwandsiegelung. Vorzugsweise werden die seitlichen Randbereiche des Zuschnittes vor der Seitenwandsiegelung mittels Heißluft vorgewärmt. Zur Verbindung der Seitenwand mit einem Boden wird die Siegelschicht mittels Heißluft oder dauerbeheizten Werkzeugen aktiviert. In die kleine Öffnung der Seitenwand wird eine Bodenwand eingesetzt und an einem nach unten vorstehenden Bodenrand durch Umfalzen des unteren Seitenwandrandes eingesiegelt.

Die Prozessgeschwindigkeit ist durch die erforderliche Einwirkungszeit des Werkzeuges bei der Seitenwandsiegelung limitiert. Zudem erfordert eine hinreichend feste Seitenwandsiegelung eine hinreichende Stärke der Siegelschicht. Kartonbecher mit einer Siegelschicht aus Polyethylen werden jedoch wegen des hohen Ressourcenverbrauchs bei der Herstellung, der komplexen Rezyklierbarkeit und der fehlenden Kompostierbarkeit zunehmend kritisch betrachtet.

Die JP 2003 336 192 A beschreibt ein flüssigkeitsdichtes laminiertes Papier zum Herstellen insbesondere eines Papierbechers. Das laminierte Papier wird durch Laminieren eines Papieres mit einem Harz oder einer Harzzusammensetzung enthaltend ein ethylenungesättigtes Carboxylsäurecopolymer und/oder ein alkalimetallneutralisiertes Produkt und/oder ammoniakneutralisiertes Produkt eines ethylenungesättigten Carboxylsäurecopolymers in einer Menge von zumindest 50 Gewichtsprozent hergestellt. Die Herstellung kann durch Beschichtung einer Papierbasis mit einer wässrigen Dispersion und Trocknen des beschichteten Produktes zum Entfernen der flüchtigen Komponenten erfolgen. Nach dem Gebrauch kann die Beschichtung vollständig von der Papierbasis entfernt werden, indem sie in Kontakt mit einer alkalischen wässrigen Lösung gebracht wird.

Ferner bekannt sind Kartonbecher, bei denen der Karton mit einer siegelfähigen wässrigen Dispersion beschichtet ist. Das Material soll voll recyclebar, kompostierbar und biologisch abbaubar sein. Nachteilig ist jedoch bei diesem Material, dass die Siegelnähte nicht besonders fest sind und leicht aufgehen.

Die DE 10 2009 055 986 A1 beschreibt einen Stempel aus drucksteifem, porösen Sintermaterial zum Auftragen eines eine Art Klebstoff bildenden Primers aus einer wässrigen Kunststofflösung auf einen Randbereich von mit PE beschichteten Papiersegmenten zur Steigerung der Siegelfähigkeit.

Die KR 2013 0127410 A beschreibt die Aufrechterhaltung von Feuchtigkeit in dem für die Bildung eines Rollrandes vorgesehenen äußeren Randbereich eines Papiersegments mittels eines an einer kreisrunden Lagerstange für gesammelte Papierzuschnitte angeordneten Hochdruck-Sprühgerätes und eines auf einem Ladetisch für eine Papierverarbeitungsmaschine angeordneten Ultraschall-Befeuchters.

Davon ausgehend liegt der Erfindung die Aufgabe zugrunde, ein ressourcenschonendes Verfahren zum Herstellen von stabilen Bechern aus Karton mit einer flüssigkeitsundurchlässigen Beschichtung an der Innenseite zur Verfügung zu stellen.

Die Aufgabe wird durch ein Verfahren mit den Merkmalen von Anspruch 1 gelöst. Vorteilhafte Ausgestaltungen des Verfahrens sind in Unteransprüchen angegeben. Bei dem erfindungsgemäßen Verfahren zum Herstellen von Bechern aus Karton mit einer flüssigkeitsundurchlässigen Beschichtung an der Innenseite werden
- ein kreisringsektorförmiger oder kreissektorförmiger Zuschnitt aus dem Karton mit der flüssigkeitsundurchlässigen Beschichtung an der Innenseite um einen konischen Dorn herumgelegt, sodass seine beiden radial erstreckten seitlichen Randbereiche einander überlappen,
- die beiden radial erstreckten seitlichen Randbereiche miteinander versiegelt,
   wobei
- mindestens einer der beiden radial erstreckten seitlichen Randbereiche über seine Gesamtlängserstreckung mit einer Flüssigkeit befeuchtet wird, sodass der beschichtete Karton des radial erstreckten seitlichen Randbereichs weicher gemacht wird und danach die Randbereiche miteinander gesiegelt werden.

Bei dem erfindungsgemäßen Verfahren wird durch die Befeuchtung der seitlichen Randbereiche mit einer Flüssigkeit die Siegelverbindung erheblich verbessert. Die seitlichen Randbereiche sind die beiden radial erstreckten seitlichen Randbereiche des kreis(ring)sektorförmigen Kartonzuschnittes. Infolgedessen kann gegenüber einer herkömmlichen Versiegelung ohne vorherige Befeuchtung bei Verwendung desselben beschichteten Kartons und ansonsten identischer Ausführung der Versiegelung die Festigkeit der Siegelnaht erheblich gesteigert werden. Hierdurch ist es möglich, die Einwirkzeit des Siegelwerkzeuges zu verringern und die Ausbringung des Herstellungsverfahrens zu vergrößern. Ferner kann die Schichtdicke der Beschichtung des Kartons verringert werden, insbesondere wenn sie aus Polyethylen oder einem anderen Kunststoff besteht, der gute Siegeleigenschaften aufweist. Kartons mit Beschichtungen aus wässrigen Dispersionen oder anderen Materialien, die schlechte Siegeleigenschaften haben, können erfindungsgemäß zu hinreichend stabilen Bechern verarbeitet werden. Diese Effekte des erfindungsgemäßen Verfahrens beruhen darauf, dass die Befeuchtung des Randbereichs mit Flüssigkeit den beschichteten Karton weicher macht, sodass er leichter in Hohlkegelform gebracht und die Randbereiche inniger miteinander versiegelt werden können. Ferner wird durch die Feuchtigkeit das Formgedächtnis des beschichteten Kartons hinsichtlich seiner Ausgangsform abgebaut und im beschichteten Karton neues Formgedächtnis hinsichtlich der Hohlkegelform erzeugt. Des Weiteren werden die Rückstellkräfte des um den konischen Dorn herumgelegten Kartonzuschnittes reduziert. Zudem führt die Befeuchtung mit Flüssigkeit zu einem schnelleren Abkühlen der Siegelnaht, wodurch die Einwirkzeiten des Siegelwerkzeuges verkürzt und das Risiko des Aufspringens der Siegelnaht nach dem Abziehen des Werkzeuges verringert wird. Das schnellere Abkühlen beruht insbesondere darauf, dass die Siegeltemperatur herabgesetzt werden kann, sodass sich die Siegelnaht schneller verfestigt, und darauf, dass zugeführte Wärme von der Flüssigkeit gebunden werden kann, insbesondere wenn diese verdampft.

Gemäß einer Ausführungsart wird das Verfahren mit einem kreisringsektorförmigen Zuschnitt durchgeführt. Gemäß einer weiteren Ausführungsart wird der durch Versiegeln der beiden Randbereiche miteinander zu einer Seitenwand mit der Form eines hohlen Kegelstumpfes geformte Zuschnitt an seiner kleinen Öffnung mit einer Bodenwand versehen, um den Becher unten dicht abzuschließen. Gemäß einer anderen Ausführungsart ist der Zuschnitt kreissektorförmig, sodass durch Versiegeln der beiden Randbereiche miteinander eine Seitenwand mit der Form eines Hohlkegels geformt wird, die bereits unten geschlossen ist.

Gemäß einer weiteren Ausführungsart ist die Flüssigkeit ausgewählt aus mindestens einer der folgenden Flüssigkeiten: Wasser, Ethanol oder anderer Alkohol, Fettsäuren, Öle pflanzlichen oder tierischen Ursprunges oder andere Öle.

Gemäß einer weiteren Ausführungsart wird die Flüssigkeit zusammenhängend in Form nur einer einzigen Phase oder in Form eines Aerosol, einer Suspension oder einer Emulsion oder eines anderen Mehrphasengemisches aus der Flüssigkeit und einem Gas und/oder einem Feststoff auf den mindestens einen Randbereich aufgebracht.

Gemäß einer weiteren Ausführungsart ist die Flüssigkeit ein Gemisch verschiedener Flüssigkeiten oder eine Feststoffe enthaltende Flüssigkeit oder ein Feststoffe enthaltendes Gemisch verschiedener Flüssigkeiten.

In dieser Anmeldung ist mit Wasser eine Flüssigkeit bezeichnet, die im Wesentlichen Wasser enthält, vorzugsweise ausschließlich aus Wasser besteht. Gemäß einer bevorzugten Ausführungsart enthält das Wasser im Wesentlichen oder besteht ausschließlich aus Trinkwasser. Unter Trinkwasser wird ein Wasser verstanden, das die in der Trinkwasserverordnung in der Fassung der Bekanntmachung vom 10. März 2016 (BGBl. I S. 459), die durch Artikel 4, Absatz 21 des Gesetzes vom 18. Juli 2016 (BGBl. IS. 1.666) geändert worden ist, festgelegten Grenzwerte für die chemische (z.B. für Schwermetalle oder Pestizide) und bakteriologische Beschaffenheit des Trinkwassers einhält. Gemäß einer weiteren Ausführungsart enthält das Wasser zusätzlich eine oder mehrere flüssige oder feste Bestandteile.

Gemäß einer weiteren Ausführungsart wird die Flüssigkeit als zusammenhängende Flüssigkeit auf zumindest einen Randbereich aufgebracht. Gemäß einer anderen Ausführungsart wird die Flüssigkeit auf den mindestens einem Randbereich in Form eines Aerosols oder einer anderen Dispersion aufgebracht, die die Flüssigkeit in Tröpfchenform in einem Gas enthält. Gemäß einer weiteren Ausführungsart ist das Gas ein Dampf der Flüssigkeit, d.h. die Flüssigkeit wird in Form eines übersättigten Dampfes auf den mindestens einen Randbereich aufgebracht. Gemäß einer weiteren Ausführungsart ist das Gas Kohlendioxid, Stickstoff, Sauerstoff oder Luft.

Gemäß einer weiteren Ausführungsart ist die Flüssigkeit oder das Mehrphasengemisch für die Herstellung von Lebensmittelverpackungen geeignet. Hierbei handelt es sich vorzugsweise um eine Flüssigkeit oder Mehrphasengemisch, die oder das den Kriterien der Verordnung 2023/2006/EC, Artikel 3 genügt. Vorzugsweise handelt es sich hierbei um eine Flüssigkeit oder Mehrphasengemisch, die oder das gemäß ECMA Good Manufacturing Practice Guide - ECMA GMP Leitlinie, veröffentlicht: Dezember 2013, für die Herstellung von Faltschachteln geeignet sind, die mit Lebensmitteln in Kontakt kommen oder kommen könnten oder die Quelle chemischer Migration in Lebensmittel sein könnten.

Ferner sind Kartone im Sinne dieser Anmeldung Materialien, die ein Flächengewicht von 180g/m² bis 600g/m² aufweisen, wobei das Flächengewicht der Beschichtung noch hinzukommt. Kartone im Sinne dieser Anmeldung sind aber auch Materialien mit geringeren Flächengewichten, insbesondere ab 80g/m², oder größeren Flächengewichten, die für die Herstellung von Bechern für Einmalgebrauch geeignet sind und auch als Papiere oder Pappen bezeichnet werden.

Gemäß einer vorteilhaften Ausführungsart wird die seitliche Schnittkante des Randbereichs befeuchtet. An der seitlichen Schnittkante kann die Flüssigkeit vorteilhaft in den Randbereich des Zuschnitts eindringen. Gemäß einer weiteren Ausführungsart wird die Außenseite des Randbereichs randseitig befeuchtet, insbesondere wenn dort keine die Befeuchtung behindernde Beschichtung vorhanden ist. Gemäß einer bevorzugten Ausführungsart des Verfahrens werden eine Vielzahl Zuschnitte in einem Stapel bereitgehalten und die Schnittkanten der im Stapel angeordneten Zuschnitte befeuchtet. Hierdurch kann eine hinreichende Befeuchtung besonders einfach und schnell erreicht werden. In einer Kartoniermaschine können die Zuschnitte in einem Magazin befeuchtet werden, in dem sie für die Verarbeitung zu Bechern bereitgehalten werden.

Gemäß einer Ausführungsart der Erfindung wird nur einer der beiden Randbereiche des Zuschnittes befeuchtet. Bei vielen Anwendungen reicht dies aus. Bei einer anderen Ausführungsart werden beide Randbereiche des Zuschnittes befeuchtet.

Gemäß einer weiteren Ausführungsart werden die Randbereiche durch Andrücken einer erhitzten Metallschiene oder durch Andrücken einer in Ultraschallschwingungen versetzte Ultraschall-Sonotrode an die einander überlappenden Randbereiche miteinander versiegelt.

Gemäß einer weiteren Ausführungsart werden die Randbereiche durch Andrücken einer erhitzten und Wasser und/oder Wasserdampf oder eine andere Flüssigkeit oder ein anderes Mehrphasengemisch abgebenden Metallschiene oder einer Wasser und/oder Wasserdampf oder eine andere Flüssigkeit oder ein anderes Mehrphasengemisch abgebenden Ultraschall-Sonotrode gegen die einander überlappenden Randbereiche miteinander versiegelt. Bei dieser Ausführungsart fallen vorteilhaft das Befeuchten des mindestens einen seitlichen Randbereichs und das Versiegeln der beiden überlappenden Randbereiche zusammen. Auch kann bei dieser Ausführungsart nach einer vorherigen Befeuchtung mindestens eines seitlichen Randbereichs eine vorteilhafte Nachbefeuchtung des mindestens einen Randbereichs erreicht werden, die vorteilhaft für die Versiegelung der Randbereiche ist. Die erhitzte und Wasser und/oder Wasserdampf oder eine andere Flüssigkeit oder ein anderes Mehrphasengemisch abgebende Metallschiene arbeitet nach der Art eines Dampfbügeleisens.

Gemäß einer weiteren Ausführungsart erfolgt die Befeuchtung der Zuschnitte automatisch. Gemäß einer weiteren Ausführungsart wird der mindestens eine Randbereich durch Besprühen mit Flüssigkeit befeuchtet. Gemäß einer bevorzugten Ausführungsart werden die Schnittkanten der im Stapel angeordneten Zuschnitte durch Besprühen mit Flüssigkeit befeuchtet. Das Besprühen mit Wasser kann beispielsweise dergestalt erfolgen, dass fortlaufend oder intermittierend mittels Sprühdüsen geringe Mengen Flüssigkeit auf die Schnittkanten der Zuschnitte gesprüht werden, die in einem Stapel in einem Magazin bereitgehalten werden, aus dem fortlaufend einzelne Zuschnitte abgezogen werden.

Gemäß einer weiteren Ausführungsart ist die flüssigkeitsundurchlässige Beschichtung ein Polyethylen oder ein anderer Kunststoff.

Gemäß einer weiteren Ausführungsart ist die flüssigkeitsundurchlässige Beschichtung PLA (Polylactide) oder ein anderes aus nachwachsenden Rohstoffen hergestelltes, vorzugsweise recyclebares, kompostierbares und biologisch abbaubares Material.

Gemäß einer weiteren Ausführungsart ist der beschichtete Karton ein von der Firma Delipac Ltd., UK unter der Markenbezeichnung Delipac® vermarkteter nachhaltiger Flüssigverpackungskarton (sustainable barrier liquid packaging board), der zu 100% recyclebar, biologisch abbaubar und kompostierbar ist. Dieser Karton weist an der Innenseite eine Beschichtung aus einer wässrigen Dispersion auf.

Gemäß einer weiteren Ausführungsart ist der beschichtete Karton ein Karton gemäß JP 2003 33 61 92 A. Hinsichtlich der Beschaffenheit des beschichteten Kartons wird Bezug genommen auf das vorstehende Dokument, dessen Inhalt hiermit in diese Anmeldung aufgenommen wird.

Die Erfindung wird nachfolgend anhand der anliegenden Zeichnungen eines Ausführungsbeispiels näher erläutert. In den Zeichnungen zeigen:
- Fig. 1: einen Zuschnitt zur Herstellung der Seitenwand eines Bechers aus beschichteten Karton flachliegend in der Draufsicht:
- Fig. 2: einen Zuschnitt für zwei Bodenwände des Bechers aus Karton flachliegend in der Draufsicht;
- Fig. 3: den Becher aus Karton in einem Vertikalschnitt.

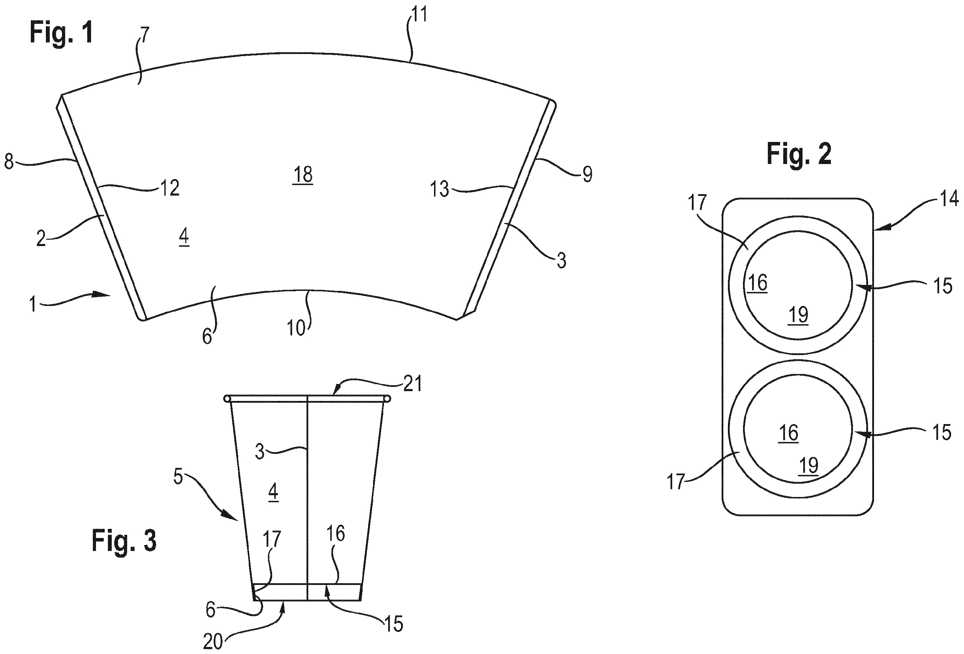

Gemäß Fig. 1 ist der Zuschnitt 1 aus beschichtetem Karton kreisringsegmentförmig mit zwei seitlichen, radial verlaufenden Randbereichen 2, 3 zum Bilden einer Seitenwand 4 eines Bechers 5. Ferner weist er einen unteren und einen oberen, in Umfangsrichtung verlaufenden Randbereich 6, 7 auf. Die seitlichen Randbereiche 2, 3 sind außen durch seitliche Schnittkanten 8, 9 und die oberen und unteren Randbereiche 8, 9 durch obere und untere Schnittkanten 10, 11 begrenzt.

Die seitlichen Randbereiche 2, 3 sind über Ritzlinien 12, 13 vom Rest des Zuschnittes 1 abgegrenzt. An den seitlichen Randbereichen 2, 3 ist der Zuschnitt 1 auf der linken Seite unten abgerundet und oben angeschrägt und auf der rechten Seite oben abgerundet und unten angeschrägt.

Gemäß Fig. 2 sind aus einem etwa rechteckigen Nutzen 14 zwei kreisscheibenförmige Zuschnitte 15 zum Bilden von Bodenwänden 16 des Bechers 5 herausgebildet.

Die Zuschnitte 15 habenrandseitig an der Bodenwand 16 einen umlaufenden Rand 17 zur Versiegelung mit der Seitenwand 4.

Sämtliche Zuschnitte 1 sind auf der Innenseite mit einem flüssigkeitsundurchlässigen Material 18, 19 beschichtet.

Der Zuschnitt 1 zum Bilden der Seitenwand 4 wird an einem oder beiden längsseitigen Randbereichen 2, 3 mit Wasser oder einer anderen Flüssigkeit befeuchtet und um einen konischen Dorn herumgelegt, sodass die beiden Randbereiche 2, 3 einander überlappen. Der außenliegende Randbereich 3 liegt mit der Beschichtung 18 an der Innenseite an der Außenseite des innenliegenden Randbereiches 2 an.

Durch Anlegen eines erhitzten Werkzeuges oder einer Ultraschall-Sonotrode von außen auf die einander überlappenden Randbereiche 2, 3 werden diese miteinander versiegelt.

Danach wird der solchermaßen zu einer hohlkegelförmigen Seitenwand 4 geformte Zuschnitt 1 von dem Dorn abgezogen.

Ein Zuschnitt 15 wird nach Falten des umlaufenden Randes 17 nach unten in die kleine Öffnung 20 der Seitenwand 4 eingebracht und der Rand 17 wird durch Umfalzen des unteren Randbereichs 6 der Seitenwand 4 mit diesem versiegelt. Hierfür werden zuvor der untere Randbereich 9 in der Nähe der kleinen Öffnung 20 des zu einem Hohlkegel geformten Zuschnittes 1 mittels Heißluft erhitzt und vorzugsweise auch der nach unten gefaltete Rand 17 des Zuschnitts 15 mittels Heißluft erhitzt. Durch Zusammenpressen des die Randbereiches 6 der Seitenwand 4 und des Randes 17 werden diese miteinander versiegelt. Danach schließt die Bodenwand 16 die Seitenwand 4 unten dicht ab.

Schließlich wird noch der Rand der großen Öffnung 21 der Seitenwand 4 nach außen gerollt, um die Lippen weich abzustützen.

## Patentansprüche

1. Verfahren zum Herstellen von Bechern aus Karton mit einer flüssigkeitsundurchlässigen Beschichtung an der Innenseite, bei dem
• ein kreisringsektorförmiger oder kreissektorförmiger Zuschnitt (1) aus dem Karton mit der flüssigkeitsundurchlässigen Beschichtung (18) an der Innenseite um einen konischen Dorn herumgelegt wird, sodass seine beiden radial erstreckten seitlichen Randbereiche (2, 3) einander überlappen,
• die beiden radial erstreckten seitlichen Randbereiche (2, 3) miteinander versiegelt werden,
**dadurch gekennzeichnet, dass**
• mindestens einer der beiden radial erstreckten seitlichen Randbereiche (2, 3) über seine Gesamtlängserstreckung mit einer Flüssigkeit befeuchtet wird, sodass der beschichtete Karton des radial erstreckten seitlichen Randbereichs (2, 3) weicher gemacht wird und danach die Randbereiche miteinander versiegelt werden.

2. Verfahren nach Anspruch 1, bei dem der durch Versiegeln der beiden Randbereiche zu einer Seitenwand (4) mit der Form eines hohlen Kegelstumpfes geformte Zuschnitt (1) an seiner kleinen Öffnung (22) mit einer Bodenwand (16) versehen wird.

3. Verfahren nach Anspruch 1 oder 2, bei dem die Flüssigkeit ausgewählt ist aus mindestens einer der nachfolgenden Flüssigkeiten: Wasser, Ethylalkohol oder anderer Alkohol, pflanzliches oder tierisches Öl oder anderes Öl, Fettsäuren.

4. Verfahren nach einem der Ansprüche 1 bis 3, bei dem die Flüssigkeit zusammenhängend oder in Form eines Aerosol, einer Suspension oder einer Emulsion oder eines anderen Mehrphasengemisches aus der Flüssigkeit und einem Gas und/oder einem Feststoff auf den mindestens einen Randbereich aufgebracht wird.

5. Verfahren nach einem der Ansprüche 1 bis 4, bei dem der seitliche Randbereich (2, 3) an einer seitlichen Schnittkante und/oder an einer Außenseite mit Flüssigkeit befeuchtet wird.

6. Verfahren nach einem der Ansprüche 1 bis 5, bei dem eine Vielzahl Zuschnitte (1) in einem Stapel bereitgehalten werden und die Schnittkanten der im Stapel angeordneten Zuschnitte befeuchtet werden.

7. Verfahren nach einem der Ansprüche 1 bis 6, bei dem beide Randbereiche (2, 3) des Zuschnittes (1) befeuchtet werden.

8. Verfahren nach einem der Ansprüche 1 bis 7, bei dem die Randbereiche (2, 3) durch Andrücken mit einer erhitzten Metallschiene oder einer Ultraschall-Sonotrode miteinander versiegelt werden.

9. Verfahren nach einem der Ansprüche 1 bis 8, bei dem mindestens ein Randbereich (2, 3) durch Besprühen mit Flüssigkeit befeuchtet wird.

10. Verfahren nach einem der Ansprüche 1 bis 9, bei dem der außen angeordnete seitliche Randbereich (3) durch Andrücken einer Flüssigkeit abgebenden, erhitzten Metallschiene oder Ultraschall-Sonotrode befeuchtet wird.

11. Verfahren nach einem der Ansprüche 1 bis 10, bei dem die flüssigkeitsundurchlässige Beschichtung (18, 19) Polyethylen oder ein anderer Kunststoff ist.

12. Verfahren nach einem der Ansprüche 1 bis 11, bei dem die flüssigkeitsundurchlässige Beschichtung (18, 19) frei von Polyethylen oder anderem Kunststoff ist.

13. Verfahren nach einem der Ansprüche 1 bis 12, bei dem die Beschichtung (18, 19) eine wässrige Dispersionsbeschichtung ist.

## Claims

1. A method for the manufacture of cups made of carton having a liquid-impermeable coating on the inside, in which
• an annular sector-shaped or circular sector-shaped blank (1) from the carton having the liquid-impermeable coating (18) on the inside is laid around a conical dome so that its two radially extended lateral edge areas (2, 3) overlap one another,
• the two radially extended lateral edge areas (2, 3) are sealed to one another, **characterized in that**
• at least one of the two radially extended lateral edge areas (2, 3) is moistened with a liquid over its total longitudinal extension so that the coated carton of the radially extended lateral edge area (2, 3) is made softer and the edge areas are then sealed to one another.

2. The method according to Claim 1, in which the blank (1) formed by sealing the two edge areas to a side wall (4) having the form of a hollow truncated cone (16) is provided at its small opening (22) with a bottom wall (16).

3. The method according to Claim 1 or 2, in which the liquid is selected from at least one of the following liquids: water, ethyl alcohol or other alcohol, vegetable or animal oil or other oil, fatty acids.

4. The method according to any one of Claims 1 to 3, in which the liquid is applied continuously or in the form of an aerosol, a suspension or an emulsion or another multiphase mixture of the liquid and a gas and/or a solid to the at least one edge area.

5. The method according to any one of Claims 1 to 4, in which the lateral edge area (2, 3) is moistened with liquid on a lateral cutting edge and/or on an outside.

6. The method according to any one of Claims 1 to 5, in which a plurality of blanks (1) is kept ready in a stack and the cutting edges of the blanks arranged in the stack are moistened.

7. The method according to any one of Claims 1 to 6, in which both edge areas (2, 3) of the blank (1) are moistened.

8. The method according to any one of Claims 1 to 7, in which the edge areas (2, 3) are sealed to one another by pressing on with a heated metal rail or an ultrasonic sonotrode.

9. The method according to any one of Claims 1 to 8, in which at least one edge area (2, 3) is moistened by spraying with liquid.

10. The method according to any one of Claims 1 to 9, in which the externally arranged lateral edge area (3) is moistened by pressing on a liquid-emitting, heated metal rail or ultrasonic sonotrode.

11. The method according to any one of Claims 1 to 10, in which the liquid-impermeable coating (18, 19) is polyethylene or another plastic.

12. The method according to any one of Claims 1 to 11, in which the liquid-impermeable coating (18, 19) is free of polyethylene or other plastic.

13. The method according to any one of Claims 1 to 12, in which the coating (18, 19) is an aqueous dispersion coating.

## Revendications

1. Procédé de fabrication de gobelets en carton doté d'un revêtement imperméable à l'eau sur le côté intérieur, dans lequel
• un flan (1) en forme de secteur annulaire circulaire ou en forme de secteur circulaire découpé dans le carton doté du revêtement imperméable à l'eau (18) est placé autour d'un mandrin conique sur le côté intérieur, de telle façon que ses deux régions de bord latérales s'étendant radialement (2, 3) se chevauchent mutuellement,
• les deux régions de bord latérales s'étendant radialement (2, 3) sont scellées ensemble,
**caractérisé en ce que**
• l'une au moins des deux régions de bord latérales s'étendant radialement (2, 3) est humidifiée avec un liquide sur toute son extension longitudinale, de telle façon que le carton revêtu de la région de bord latérale s'étendant radialement (2, 3) est rendu plus souple et les régions de bord sont ensuite scellées ensemble.

2. Procédé selon la revendication 1, dans lequel le flan (1) formé par scellement des deux régions de bord de manière à obtenir une paroi latérale (4) présentant la forme d'un cône tronqué creux est pourvu d'une paroi de fond (16) au niveau de sa petite ouverture (22).

3. Procédé selon la revendication 1 ou 2, dans lequel le liquide est sélectionné à partir de l'un au moins des liquides suivants : l'eau, l'alcool éthylique ou un autre alcool, une huile végétale ou animale ou une autre huile, des acides gras.

4. Procédé selon l'une des revendications 1 à 3, dans lequel le liquide est appliqué en continu ou sous la forme d'un aérosol, d'une suspension ou d'une émulsion ou d'un autre mélange polyphasique composé du liquide et d'un gaz et/ou d'une matière solide, sur l'au moins une région de bord.

5. Procédé selon l'une des revendications 1 à 4, dans lequel la région de bord latérale (2, 3) est humidifiée avec du liquide au niveau d'une arête de coupe latérale et/ou d'un côté extérieur.

6. Procédé selon l'une des revendications 1 à 5, dans lequel une pluralité de flans (1) sont mis à disposition sous la forme d'une pile et les arêtes de coupe des flans disposés dans la pile sont humidifiées.

7. Procédé selon l'une des revendications 1 à 6, dans lequel les deux régions de bord (2, 3) du flan (1) sont humidifiées.

8. Procédé selon l'une des revendications 1 à 7, dans lequel les régions de bord (2, 3) sont scellées ensemble par compression à l'aide d'un rail métallique chauffé ou d'une sonotrode à ultrasons.

9. Procédé selon l'une des revendications 1 à 8, dans lequel au moins une région de bord (2, 3) est humidifiée avec du liquide par pulvérisation.

10. Procédé selon l'une des revendications 1 à 9, dans lequel la région de bord latérale (3) disposée à l'extérieur est humidifiée par compression à l'aide d'un rail métallique chauffé déposant du liquide ou d'une sonotrode à ultrasons.

11. Procédé selon l'une des revendications 1 à 10, dans lequel le revêtement imperméable à l'eau (18, 19) est en polyéthylène ou une autre matière plastique.

12. Procédé selon l'une des revendications 1 à 11, dans lequel le revêtement imperméable à l'eau (18, 19) est exempt de polyéthylène ou d'une autre matière plastique.

13. Procédé selon l'une des revendications 1 à 12, dans lequel le revêtement (18, 19) est un revêtement en dispersion aqueux.
